Europäisches Patentamt

**European Patent Office**

Office européen des brevets

(19)

(11) Publication number: **0 149 916**

**A2**

(12) # EUROPEAN PATENT APPLICATION

(21) Application number: **84308892.3**

(22) Date of filing: **19.12.84**

(51) Int. Cl.⁴: **B 23 K 9/06**

(30) Priority: **22.12.83 NO 834754**

(43) Date of publication of application:
**31.07.85 Bulletin 85/31**

(84) Designated Contracting States:
**DE FR GB IT NL SE**

(71) Applicant: **NORWELD AS**
**P.O. Box 4216 Torshov**
**N-0401 Oslo 4(NO)**

(72) Inventor: **Norderhaug, Olav**
**Harriet Backersvei 4**
**N-1344 Haslum(NO)**

(74) Representative: **Pilch, Adam John Michael et al,**
**c/o D. Young & Co. 10 Staple Inn**
**London WC1V 7RD(GB)**

(54) **Method and device for igniting a welding arc for an arc welding apparatus.**

(57) Method and device for igniting a welding arc for an arc welding apparatus by means of a high voltage discharge between a welding electrode (E) with a series connected smoothing coil (G) and a workpiece (A). An ignition winding (T) with substantially fewer turns than the smoothing coil (G) is disposed in inductive coupling with said coil, and current is supplied to the winding from a current source, preferably a charged capacitor (C1), and abruptly broken after a pre-selected time, in order to induce a high voltage pulse in the coil and achieve a spark ignition of the arc through said high voltage discharge. In synchronism with said abrupt current break, the current source is preferably switched to conduct current through the smoothing coil, the welding electrode and the high voltage discharge, thereby facilitating the ignition of the arc during the discharge. The high voltage discharge and the optional current through said discharge are preferably given the same polarity as the intended welding arc.

EP 0 149 916 A2

Croydon Printing Company Ltd.

## METHOD AND DEVICE FOR IGNITING A WELDING ARC FOR AN ARC WELDING APPARATUS

The present invention relates to ignition of a welding arc for an arc welding apparatus, and in particular to such ignition by means of a high voltage discharge between a welding electrode with a series connected smoothing coil and a workpiece.

In many cases in practice it is not desirable to initiate the welding arc in ordinary manner by touching the workpiece with the welding electrode. In such cases it is common to provide a high voltage discharge across a gap between the welding electrode and the workpiece. This is achieved in actual practice by discharging a charged capacitator (e.g. at 1000 volts) through a certain portion of a winding on a ferromagnetic core in series with the welding electrode. A high voltage pulse is then induced along the whole extension of the core, and this pulse is discharged between the electrode and the workpiece for spark ignition of the desired welding arc.

Such extra iron core with autotransformer winding, partly wound with heavy wire, however raises the costs of the welding apparatus, makes it bulky and contributes to a great extent to an increase of the weight of the apparatus. Furthermore, a charging capacitor implies high voltage and increased needs for isolation inside the apparatus.

Thus it is an object of the present invention to provide a method and a device for overcoming the above deficiencies in conjunction with ignition of a welding arc by means of a high voltage discharge between a welding electrode with a series connected smoothing coil and a workpiece.

In accordance with the invention, there is provided a method for igniting an arc for a welding apparatus by means of a high voltage discharge between a welding electrode with a series connected smoothing coil and a workpiece, characterized in that an ignition winding with substantially fewer turns than the smoothing coil is inductively coupled with said coil, current

being supplied to said winding from a current source and abruptly broken after a predetermined time, in order to induce a high voltage pulse in the smoothing coil and thereby produce a spark ignition of the welding arc by said high voltage discharge.

In order to further secure the ignition of the welding arc by the spark discharge, provisions are preferably made that the current source in synchronism with said abrupt current break is connected and made to supply a current flow through the smoothing coil, the welding electrode and the high voltage discharge, preferably until a changing capacitor of the current source is completely discharged and/or thyristors in a main rectifier bridge of the welding apparatus are synchronously triggered.

Furthermore, during this procedure the high voltage discharge and the optional current flow from the current source through said discharge are preferably given the same polarity as the intended welding arc.

In accordance with the invention, there is also provided a device for igniting a welding arc for an arc welding apparatus by means of a high voltage discharge between a welding electrode with a series connected smoothing coil and a workpiece, characterized in that an ignition winding with substantially fewer turns than the smoothing coil is disposed in induction coupling with said coil, switching means and a time controller being provided to switch a current source to supply a current flow through said winding and to break abruptly said current after a predetermined time, in order to induce a high voltage pulse in the smoothing coil and thereby produce a spark ignition of the welding arc by said high voltage discharge.

With such method and device according to the invention, only a few lightweight turns on the outside of a smoothing coil, which would otherwise be included in the apparatus in any event, are sufficient to provide the desired high voltage discharge for spark ignition of the welding arc. Also, a high voltage source within the apparatus is not necessary, as a broken current from a low voltage current source through
the ignition winding is sufficient to produce the desired
high voltage pulse by induction in the smoothing coil. By
additionally bringing current from the low voltage source
to flow through the high voltage discharge, a further
insurance of arc ignition, which is not provided by prior
art, is then achieved by simple means.

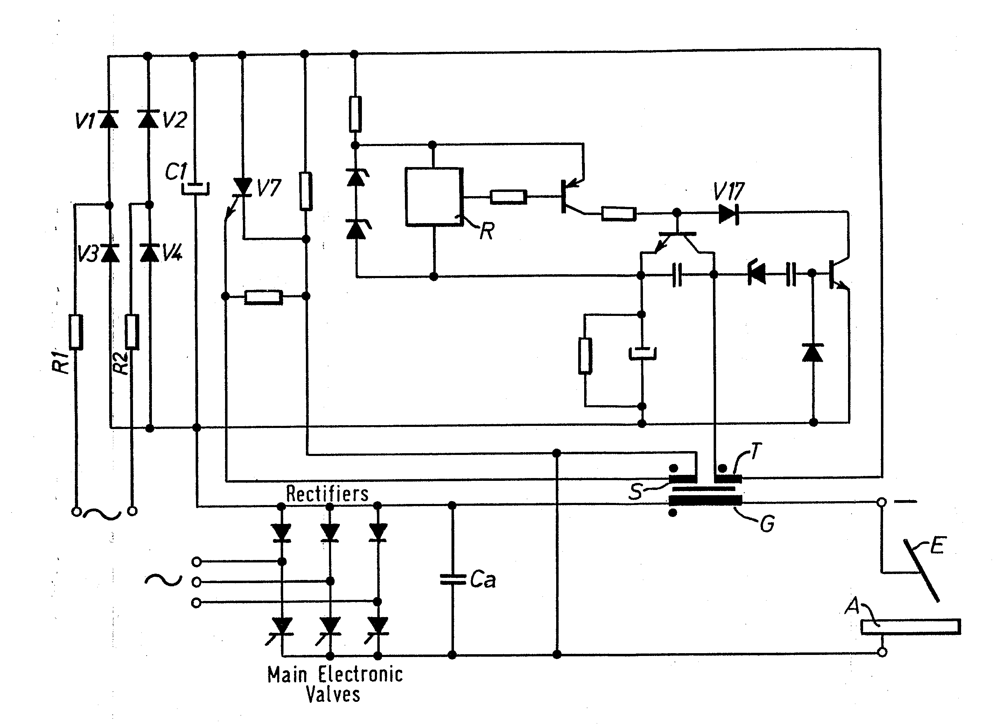

The invention will now be explained in more detail with
reference to the accompanying drawing, the only figure of
which showing a connection diagram of a device according to
the invention in conjunction with a smoothing coil and a
welding electrode of a welding apparatus.

The welding apparatus is shown with three phase AC supply
to rectifiers and main electronic valves, as well as a
decoupling capacitor Ca and a smoothing coil G in series
with a welding electrode E, which forms an arc gap against
a workpiece A.

In order to ignite a welding arc between the electrode E
and the workpiece A, a small ignition winding T is wound around
the smoothing coil G. A capacitor C1 is disposed to be
charged by a current from a mains connected rectifier bridge
V1-V4, which is supplied with single phase AC current through
series resistors R1 and R2. The capacitor C1 is charged from
the rectifier bridge to a moderate voltage of e.g. 65 volts,
and is disposed to be discharged through the ignition winding
T by means of a time controller R opening a switching transistor V17 for conduction of current a preselected time by
applying a corresponding bias voltage to the base electrode
of the transistor. After said preselected time, which is
set in the time controller R, the controller brings the
switching transistor to reverse blocking state by applying
a corresponding bias voltage to the base electrode of the
transistor, thus abruptly breaking the current through the
ignition winding T after a conduction time of e.g. 50 $\mu$s.

During this time the current through the small winding, e.g.
with only four turns, is increased to 100-150 amperes.
By such abrupt break of a comparatively strong current,
a voltage of 300-400 volts is obtained in the ignition
winding and an induced voltage pulse of more than 6000
volts in the smoothing coil G.

The ignition winding of four turns is only a thin wire with
a diameter of e.g. 1/4 mm, and may quite simply be wound
directly on the outside of the smoothing coil. Such a
winding implies of course only an insignificant increase
of costs and weight compared with the heavy and bulky autotransformer with iron core applied in prior art devices
for high voltage ignition of a welding arc. The high
voltage pulse produced in the smoothing coil is decoupled
against the main electronic valves by means of the capacitor
Ca and is thus applied almost entirely across the gap between
the welding electrode E and the workpiece A, forming a spark
in said gap for igniting the arc. The high voltage pulse
is brief and ceases after the ignition of the welding arc.

In the illustrated embodiment also a further auxiliary
winding S, having only two turns, is provided on the
smoothing coil. With the abrupt breaking of the current
through the ignition winding T a trigger pulse is induced
in said auxiliary winding S and applied to the control
electrode of a small thyristor V7. This makes the thyristor
conducting and enables the discharge of the capacitor C1
through the smoothing coil, welding electrode and high
voltage spark at the instant of ignition, with return current
path through the workpiece A and the decoupling capacitor Ca.
This has an extremely favourable effect in securing certain
ignition of the arc. The ignition pulse obtained through
abrupt current break in the ignition winding T is brief, and
by discharging the capacitor C1 through the high voltage
spark the arc is more easily stabilised. By this also a
possible synchronous triggering of the main electronic valves in the apparatus may be achieved.

The winding direction of the ignition winding T on
the smoothing coil B is such that a high voltage pulse
of the same polarity as the intended welding arc is formed
with the break of the current through this winding.  This
is of great importance, as it has been demonstrated that
although spark discharge is achieved, ignition of the arc
takes place only with difficulty with the opposite
winding direction.

The component parts shown without labelling or references
on the drawing are disposed to provide appropriate bias
voltage for the active ignition components, i.e. the time
controller R, the switching transistor V17 and the trigger transistor
V7.  The components connected with the base of the switching
transistor V17 also provide fast removal of base current
from this transistor, in order thereby to secure a best
possible abrupt current break.  All this is in accordance
with known techniques and forms no part of the present invention.

6

## CLAIMS

1. A method for igniting an arc for a welding apparatus by means of a high voltage discharge between a welding electrode (G) and a workpiece (A), characterized in that an ignition winding (T) with substantially fewer turns than the smoothing coil (G) is inductively coupled with said coil, current being supplied to said winding from a current source and abruptly broken after a predetermined time, in order to induce a high voltage pulse in the smoothing coil and thereby produce a spark ignition of the welding arc by said high voltage discharge.

2. A method as claimed in claim 1, characterized in that the current source is a charged capacitor (C1).

3. A method as claimed in claim 2, characterized in that the current source is in synchronism with said abrupt current break and is connected and made to supply a current flow through the smoothing coil (G), the welding electrode (E) and the high voltage discharge, until said capacitor (C1) is completely or at least partially discharged and/or thyristors in a main rectifier bridge of the welding apparatus are synchronously triggered.

4. A method as claimed in claim 1, claim 2 or claim 3, characterized in that the high voltage discharge and the optional current flow from the current source through said discharge are given the same polarity as the intended welding arc.

5. A device for igniting a welding arc for an arc welding apparatus by means of a high voltage discharge between a welding electrode (E) with a series connected smoothing coil (G) and a workpiece, (A), characterized in that an ignition winding (T) with substantially fewer turns than the smoothing coil (G) is disposed in induction coupling with said coil, switching means (V17) and a time controller (R) being provided to switch a current source to supply a current flow through said winding (T) and to break abruptly said current after a predetermined time, in order to induce a high voltage pulse in the smoothing coil (G) and thereby produce a spark ignition of the welding arc by said high voltage discharge.

6.    A device as claimed in claim 5, characterized in that the current source is a charged capacitor (C1).

7.    A device as claimed in claim 6, characterized in that switching means (S,V7) are arranged in synchronism with said abrupt current break to connect the current source and make it to supply a current flow through the smoothing coil (G), the welding electrode (E) and said high voltage discharge, for complete or at least partial discharge of said capacitor (C1) and/or synchronous triggering of thyristors in a main rectifier bridge of the welding apparatus.

8.    A device as claimed in claim 7, characterized in that said switching means comprise a trigger winding (S) in induction coupling with said ignition winding (T) and connected with the control input of a controllable switch (V7) arranged to link the current source with the smoothing coil, the welding electrode and the high voltage discharge.

9.    A device as claimed in claim 7 or claim 8, characterized in that one or both of said windings (T,S), current source (C1) and switching means (S,V7) are arranged so that both the high voltage discharge and the optional current from the current source through said discharge adopt the same polarity as the intended welding arc.

E

A

T

G

S

V17

Ca

R

V7

C1

V2

V4

R2

V1

V3

R1

Rectifiers

Main Electronic Valves